(19) Europäisches Patentamt
European Patent Office
Office européen des brevets

(11) **EP 4 744 868 A1**

(12) **EUROPEAN PATENT APPLICATION**
published in accordance with Art. 153(4) EPC

(43) Date of publication:
**20.05.2026 Bulletin 2026/21**

(21) Application number: **25820904.8**

(22) Date of filing: **27.03.2025**

(51) International Patent Classification (IPC):
**B29C 64/393** (2017.01)  **B29C 64/264** (2017.01)
**B29C 64/386** (2017.01)  **B33Y 50/00** (2015.01)

(86) International application number:
**PCT/CN2025/085466**

(87) International publication number:
**WO 2025/256223 (18.12.2025 Gazette 2025/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2024 CN 202410755681**

(71) Applicant: **Guangzhou Heygears IMC. Inc
Guangzhou, Guangdong 510663 (CN)**

(72) Inventors:
• **ZHANG, Siwei
Guangzhou, Guangdong 510663 (CN)**
• **LIANG, Yuhao
Guangzhou, Guangdong 510663 (CN)**
• **LI, Qianyun
Guangzhou, Guangdong 510663 (CN)**
• **HU, Jun
Guangzhou, Guangdong 510663 (CN)**
• **CHEN, Jianlin
Guangzhou, Guangdong 510663 (CN)**
• **DING, Peng
Guangzhou, Guangdong 510663 (CN)**

(74) Representative: **Herzog IP Patentanwalts GmbH
Steinstraße 16-18
40212 Düsseldorf (DE)**

(54) **LIGHT SOURCE CONTROL METHOD AND APPARATUS, THREE-DIMENSIONAL PRINTING DEVICE, AND NON-VOLATILE STORAGE MEDIUM**

(57) The present disclosure provides a method and apparatus for controlling a light source, a three-dimensional printing device, and a non-volatile storage medium. The method includes: obtaining a target projected image, where the target projected image is configured for three-dimensional printing; dividing an area of a selective light-transmitting display into an image projection region and an image non-projection region based on the target projected image; and controlling a first light emitting diode (LED) unit corresponding to the image projection region to emit light based on a first preset power, and controlling a second LED unit corresponding to the image non-projection region to emit light based on a second preset power, to cause a cumulative exposure energy of the image non-projection region to be less than a critical exposure energy of a photocurable material and cause a cumulative exposure energy of the image projection region to be greater than or equal to the critical exposure energy of the photocurable material. The present disclosure addresses the technical problem in the related art that details of a three-dimensional printed object are unclear or distorted because a liquid crystal display (LCD) screen may cure a material in the image non-projection region.

Fig.2

| A target projected image is obtained, where the target projected image is configured for three-dimensional printing | S202 |

| An area of the selective light-transmitting display is divided into an image projection region and an image non-projection region based on the target projected image | S204 |

| A first LED unit corresponding to the image projection region is controlled to emit light based on first preset power, and a second LED unit corresponding to the image non-projection region is controlled to emit light based on second preset power, to cause a cumulative exposure energy of the image non-projection region to be less than a critical exposure energy of a photocurable material and cause a cumulative exposure energy of the image projection region to be greater than or equal to the critical exposure energy of the photocurable material | S206 |

EP 4 744 868 A1

## Description

The present disclosure claims priority to Chinese Patent Application No. 2024107556816, filed to the China National Intellectual Property Administration on June 12, 2024 and entitled "method and apparatus for controlling light source, three-dimensional printing device, and non-volatile storage medium", the disclosure of which is incorporated herein by reference in its entirety.

## Technical Field

The present disclosure relates to the technical field of three-dimensional printing, and specifically to, a method and apparatus for controlling a light source, a three-dimensional printing device, and a non-volatile storage medium.

## Background

In the related art, during three-dimensional printing, a Liquid Crystal Display (LCD) screen may be used to display a pattern for printing. A photocurable material located above the LCD screen may be cured based on the pattern to obtain a layer of three-dimensional object. Subsequently, the LCD screen updates a displayed pattern, so that a next layer of three-dimensional object may be cured based on a previous layer. This process continues until printing of a three-dimensional model is completed. When the LCD screen displays a projected image, a light source irradiates liquid photosensitive resin. Pixels on the LCD screen selectively block or transmit light based on an image requirement. Transmitted light is then focused onto the liquid photosensitive resin through a lens, to cure the liquid photosensitive resin.

Even when a grayscale of the LCD screen is set to a minimum value, the light source of the LCD screen may still provide weak light passing through the screen. This may possibly cause a material to be cured in an image non-projection region. As a result, details of a printing result are unclear or distorted.

No effective solutions have been proposed to address the aforementioned problems.

## Summary

Embodiments of the present disclosure provide a method and apparatus for controlling a light source, a three-dimensional printing device, and a non-volatile storage medium, to at least address the technical problem in the related art that details of a three-dimensional printed object are unclear or distorted because a material in an image non-projection region of an LCD screen is possibly cured.

According to one aspect of the embodiments of the present disclosure, a method for controlling a light source is provided, applied to a three-dimensional printing device. The three-dimensional printing device includes: a selective light-transmitting display and a light source, wherein the light source includes a plurality of Light Emitting Diode (LED) units, and light emitted by the light source is projected onto a photocurable material through the selective light-transmitting display, and the method for controlling the light source further includes: obtaining a target projected image, wherein the target projected image is configured for three-dimensional printing; dividing an area of the selective light-transmitting display into an image projection region and an image non-projection region based on the target projected image, wherein the image projection region corresponds to a first LED unit among the plurality of LED units, and the image non-projection region corresponds to a second LED unit among the plurality of LED units; and controlling the first LED unit to emit light based on a first preset power, to cause a cumulative exposure energy of the image projection region to be greater than or equal to a critical exposure energy of the photocurable material, and controlling the second LED unit to emit light based on a second preset power, to cause a cumulative exposure energy of the image non-projection region to be less than the critical exposure energy of the photocurable material.

In some embodiments, the first preset power is a power set after light intensity calibration.

In some embodiments, the method includes: obtaining a plurality of slice images based on a three-dimensional printed object, where each slice image determines the target projected image.

In some embodiments, the method includes: adjusting the first preset power based on a preset coefficient to obtain the second preset power.

In some embodiments, the preset coefficient is determined in the following manner: obtaining the number of printed layers required by the three-dimensional printed object, wherein a projection of a sliced model of the three-dimensional printed object includes the target projected image; determining the critical exposure energy required by curing of the photocurable material; determining an initial dynamic contrast of the three-dimensional printing device, and a curing interface exposure energy per unit area of the three-dimensional printing device within the image projection region, wherein the initial dynamic contrast is a ratio of a light intensity of light projected by the three-dimensional printing device in the image projection region to a light intensity of light projected by the three-dimensional printing device in the image non-projection region; and determining the preset coefficient based on the number of printed layers, the critical exposure energy, the initial dynamic contrast, and the curing interface exposure energy.

In some embodiments, the determining the critical exposure energy required by curing of the photocurable material includes: obtaining a printing parameter when the photocurable material is used for three-dimensional printing, and a physical parameter of a formed three-dimensional printed object; and inputting the printing parameter and the physical parameter to a pretrained deep learning model, and outputting, by the deep learning model, the critical exposure energy corresponding to the photocurable material, wherein the deep learning model is trained by using training samples, and each of the training samples includes a sample critical exposure energy corresponding to a sample material, and a sample printing parameter and a sample physical parameter when the sample material is used for three-dimensional printing.

In some embodiments, a range of the preset coefficient is configured to be within an interval of $[0, C_0 E_C/nE_0)$, where $C_0$ represents the initial dynamic contrast; $E_C$ represents the critical exposure energy; $n$ represents the number of printed layers; and $E_0$ represents the curing interface exposure energy.

According to another aspect of the embodiments of the present disclosure, an apparatus for controlling a light source is further provided, applied to a three-dimensional printing device. The apparatus for controlling the light source includes: a selective light-transmitting display, which is configured to selectively transmit light; a light source, which includes a plurality of LED units, where light emitted by the plurality of LED units is projected onto a photocurable material through the selective light-transmitting display; and a controller, which is electrically connected to each LED unit and is configured to: control a first LED unit among the plurality of LED units to emit light based on a first preset power, to cause a cumulative exposure energy of an image projection region of the selective light-transmitting display to be greater than or equal to a critical exposure energy of the photocurable material, where the first LED unit corresponds to the image projection region; and control a second LED unit among the plurality of LED units to emit light based on a second preset power, to cause a cumulative exposure energy of an image non-projection region of the selective light-transmitting display to be less than the critical exposure energy of the photocurable material, where the second LED unit corresponds to the image non-projection region.

In some embodiments, any one of the plurality of LED units includes an LED and a collimation assembly; the collimation assembly is correspondingly arranged on a light outlet side of the LED; and the collimation assembly is configured to collimate light emitted by the LED.

In some embodiments, the collimation assembly includes at least one of the following: a convex lens, a Fresnel lens, or a total internal reflection lens.

In some embodiments, any one of the plurality of LED units further includes a light source reflection assembly; and the light source reflection assembly is arranged between the LED and the collimation assembly and is configured to collect the light emitted by the LED.

In some embodiments, any one of the plurality of LED units further includes a light blocking assembly; and the light blocking assembly is arranged between the LED and the collimation assembly and is configured to block light emitted by the LED towards a position in which the LED of another LED unit is located.

In some embodiments, the controller includes an LED driving circuit; and the LED driving circuit is connected to the plurality of LED units and is configured to control any one of the plurality of LED units to independently emit light.

In some embodiments, the LED driving circuit includes an LED driver chip and a control chip; the control chip is connected to the LED driver chip; the plurality of LED units are arranged in an array; the LED driver chip includes a plurality of positive electrode pins and a plurality of negative electrode pins; any one of the plurality of positive electrode pins is connected to positive electrodes of LED units that are located in the same column; and any one of the plurality of negative electrode pins is connected to negative electrodes of LED units that are located in the same row.

In some embodiments, the LED driving circuit includes an LED driver chip and a control chip; the control chip is connected to the LED driver chip; the LED driver chip includes a plurality of driving pins; and the plurality of LED units are correspondingly connected to the plurality of driving pins.

According to another aspect of the embodiments of the present disclosure, a three-dimensional printing device is further provided, including a forming platform, configured to bear a three-dimensional printed object; a tray, configured to accommodate a photocurable material; and the apparatus for controlling the light source of any one of the above solutions, where the photocurable material is cured layer by layer under irradiation of the light source and formed on the forming platform to obtain a three-dimensional object.

According to still another aspect of the embodiments of the present disclosure, a non-volatile storage medium is further provided. The non-volatile storage medium includes a stored program. The program, when executed, controls a device with the non-volatile storage medium to perform the method for controlling the light source of any one of the above solutions.

In the embodiments of the present disclosure, a manner of using a point light source to provide light intensity for an LCD screen is used. By setting a light emission intensity for the image non-projection region based on a light curing characteristic of the material, a purpose of preventing the light intensity of the image non-projection region from curing the material is achieved. Thus, a technical effect of improving the accuracy of printing the three-dimensional printed object is achieved, and the technical problem in the related art that details of the three-dimensional printed object are unclear or distorted because the LCD screen may also cure the material in the image non-projection region.

**Brief Description of the Drawings**

The accompanying drawings described herein are used to provide a further understanding of the present disclosure, and form part of the present disclosure. Exemplary embodiments of the present disclosure and descriptions thereof are used to explain the present disclosure, and do not constitute any inappropriate limitation to the present disclosure. In the accompanying drawings:

FIG. 1 shows a structural block diagram of hardware of a computer terminal for implementing a method for controlling a light source;

FIG. 2 is a flowchart of a method for controlling a light source according to an embodiment of the present disclosure;

FIG. 3 is a schematic structural diagram of an apparatus for controlling a light source according to an embodiment of the present disclosure;

FIG. 4 is a schematic structural diagram of an LED unit according to some embodiments of the present disclosure;

FIG. 5 is a schematic structural diagram of another LED unit according to some embodiments of the present disclosure;

FIG. 6 is a schematic structural diagram of still another LED unit according to some embodiments of the present disclosure;

FIG. 7 is a schematic structural diagram of another light source control apparatus according to some embodiments of the present disclosure;

FIG. 8 is a schematic structural diagram of still another light source control apparatus according to some embodiments of the present disclosure;

FIG. 9 is a schematic diagram of a driving circuit according to some embodiments of the present disclosure;

FIG. 10 is a schematic diagram of another driving circuit according to some embodiments of the present disclosure;

FIG. 11 is a schematic structural diagram of still another LED unit according to some embodiments of the present disclosure;

FIG. 12 is a structural block diagram of a three-dimensional printing device according to some embodiments of the present disclosure; and

FIG. 13 is a schematic diagram of division of a selective light-transmitting display according to an embodiment of the present disclosure.

Reference numerals are as follows: 31: selective light-transmitting display; 32: LED unit; 33: power control mechanism; 41: LED; 42: collimation assembly; 51: light source reflection assembly; 61: light blocking assembly; 71: LED driving circuit; 81: light intensity calibration assembly; 82: micro probe; 110: light; 121: forming platform; 122: tray; 123: light source control apparatus; 1310: image non-projection region; and 1320: image projection region.

**Detailed Description of the Embodiments**

In order to make a person skilled in the art to better understand the solutions of the present disclosure, the technical solutions in the embodiments of the present disclosure are clearly and completely described below with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

It should be noted that the terms "first", "second", etc. in the specification and claims of the present disclosure and the above accompanying drawings are defined to distinguish similar objects, and do not have to be used to describe a specific order or sequence. It should be understood that such used data is interchangeable where appropriate, so that the embodiments of the present disclosure described here can be implemented in an order other than those illustrated or described here. In addition, the terms "include" and "have", as well as any variations thereof, are intended to cover non-exclusive inclusion. For example, a process, method, system, product, or equipment that includes a series of operations or units does not need to be limited to those clearly listed operations or units, but may include other operations or units not clearly listed or inherent to these processes, methods, products, or equipment.

According to the embodiments of the present disclosure, a method for controlling a light source embodiment is provided. It should be noted that steps shown in the flowchart in the accompanying drawings can be executed in a computer system such as a set of computer-executable instructions. Furthermore, although a logical order is shown in the flowchart. In some cases, the steps shown or described can be executed in an order different from the order here.

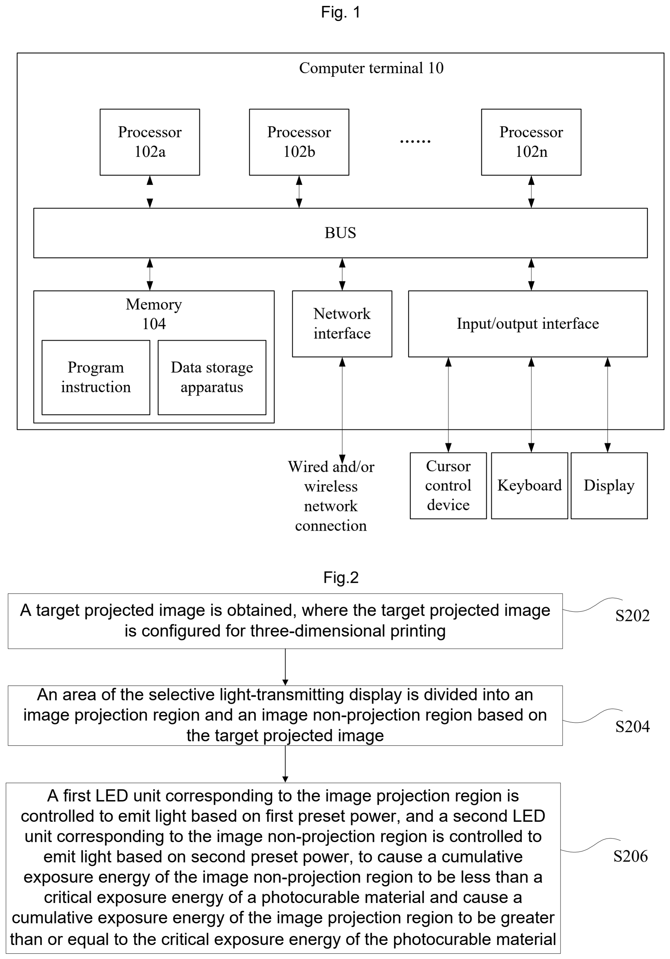

The method embodiment provided in the embodiments of the present application may be performed on a mobile terminal, a computer terminal, or a similar computing device. FIG. 1 shows a structural block diagram of hardware of a computer terminal for implementing a method for controlling a light source. As shown in FIG. 1, a computer terminal 10 may include one or more processors (shown as 102a, 102b, ..., 102n) (each processor may include but is not limited to a processing apparatus such as a micro control unit (MCU) or a field programmable logic device (FPGA)), and a memory 104 for storing data. In addition, the computer terminal may further include: a display, an input/output interface (I/O interface), a universal serial bus (USB) port (which can be included as one of ports of a bus), a network interface, a power source, and/or a camera. A person of ordinary skill in the art can understood that the structures shown in FIG. 1 are only illustrative, and do not impose a limitation on structures of the above electronic apparatus. For example, the computer terminal 10 may further include more or fewer components than those shown in FIG. 1, or have a configuration different from that shown in FIG. 1.

It should be noted that the one or more processors and/or other data processing circuits can generally be referred to as "data processing circuit" herein. The data processing circuit can be fully or partially embodied as software, hardware, firmware, or any other combination. In addition, the data processing circuit can be a single independent processing module, or fully or partially integrated into any of other elements in the computer terminal 10. As mentioned in the embodiments of the present application, the data processing circuit serves as a processor control (such as an option of a variable-resistance terminal path connected to an interface).

The memory 104 may be configured to store software programs and modules of applications, for example, program instructions/modules corresponding to a method for controlling a light source in the embodiments of the present application. The processor executes the software programs and the modules that are stored in the memory 104, to perform various functional data processing, namely, to implement the light source control method of the above application. The memory 104 may include a high-speed random access memory, and a non-volatile memory such as one or more magnetic storage apparatuses, flash memories, or other non-volatile solid-state memories. In some instances, the memory 104 may further include a memory remotely arranged with respect to the processor. These remote memories can be connected to the computer terminal 10 through a network. Examples of the above network include, but are not limited to, Internets, intranets, local area networks, mobile communication networks, and combinations thereof.

The display can be, for example, a touch screen type liquid crystal display (LCD). The LCD enables a user to interact with a user interface of the computer terminal 10.

During three-dimensional (3D) printing, a 3D model of a printed object may be first built, and then the 3D model of the printed object is sliced layer by layer. During printing, starting from a first layer of sliced model, each layer of sliced model is printed on a previous layer of sliced model that is successfully printed, thus finally obtaining a complete 3D model of the printed object, i.e. a finally formed three-dimensional object. During printing of each layer of sliced model, a projected image may be generated based on a shape of this layer of sliced model. A light emitting mechanism may irradiate the projected image onto a printing region inside a tray filled with a photocurable material. Under the irradiation of the light emitted by the light emitting mechanism, the photocurable material is cured between a forming platform and a construction surface, to form a solid or semi-solid polymer that matches the projected image. Then, the solid or semi-solid polymer may be separated from the construction surface and a next layer of sliced model may be printed.

When an LCD screen is used as the light emitting mechanism to irradiate the projected image onto the photocurable material, there are many small pixels on the LCD screen, and each pixel may control transmission or blocking of light by controlling a voltage. In the printing process, the light source irradiates the photocurable material, and the pixels on the LCD screen selectively block or transmit light based on the projected image. The transmitted light is focused onto liquid photosensitive resin through a lens to cure the liquid photosensitive resin. To improve the uniformity of light transmittance of an LCD screen assembly, an initial grayscale mask may be overlaid on the projected image of the LCD screen. However, when the grayscale mask is used in the 3D printing process, even if a grayscale of the LCD screen is set to 0, a bottom light source may still provide weak light passing through the screen, which may cure a material in an image non-projection region, thus bringing problems of increased residues in the tray, screen aging, and the like, and also causing abnormal surface quality such as unclear or distorted details of a printed three-dimensional model.

For the above problems, the present application provides a method for controlling a light source. The method is applied to a three-dimensional printing device. The three-dimensional printing device includes a selective light-transmitting display and a light source. The light source includes a plurality of LED units. Light emitted by the light source is projected to a photocurable material through the selective light-transmitting display. FIG. 2 is a flowchart of a method for controlling a light source according to an embodiment of the present disclosure. As shown in FIG. 2, the method includes the following steps: Step S202: a target projected image is obtained, wherein the target projected image is configured for three-dimensional printing.

In this step, the target projected image is a projected image corresponding to a layer of sliced model of a printed three-dimensional object and may be generated based on a shape of the layer of sliced model.

Step S204: an area of the selective light-transmitting display is divided into an image projection region and an image non-projection region based on the target projected image. The image projection region corresponds to a first LED unit among the plurality of LED units, and the image non-projection region corresponds to a second LED unit among the plurality of LED units.

In this step, after the target projected image is determined, the screen may be divided into the image projection region and the image non-projection region based on a position, onto which the target projected image is projected, on the selective light-transmitting display. The screen may be divided into the image non-projection region and the image projection region based on a grayscale value of the target projected image. For example, a screen region with a non-zero image grayscale value may be set as the image projection region, and another screen region with a zero grayscale value may be the image non-projection region.

Step S206: the first LED unit is controlled to emit light based on a first preset power, to cause a cumulative exposure energy of the image projection region to be greater than or equal to a critical exposure energy of the photocurable material, and control the second LED unit to emit light based on a second preset power, to cause a cumulative exposure energy of the image non-projection region to be less than the critical exposure energy of the photocurable material.

In this step, the light source involving in the three-dimensional printing includes a plurality of LED units that may independently emit light, and light emission power may be adjusted. Among the plurality of LED units, the light emission power of the first LED unit corresponding to the image projection region may be controlled to be different from the light emission power of the second LED unit corresponding to the image non-projection region. For example, the first LED unit may be controlled to emit light at the first preset power. The first preset power is power that is enough to cure the photocurable material. That is, the first LED unit emits light, so that the cumulative exposure energy of the image projection region may be greater than or equal to the critical exposure energy of the photocurable material. The second LED unit may also be controlled to emit light at the second preset power. The second preset power is power that is not enough to cure the photocurable material. Specifically, the second preset power may be determined based on the critical exposure energy at which the photocurable material just begins to form a solid or semi-solid. That is, the second LED unit emits light, so that the cumulative exposure energy of the image non-projection region may be less than the critical exposure energy of the photocurable material.

In some embodiments, the cumulative exposure energy of the image projection region may be cumulative exposure energy required by the image projection region of a single slice layer within a specified time period. The cumulative exposure energy of the image non-projection region may be cumulative exposure energy on the image non-projection region that is used for a single slice layer within a specified time period. The cumulative exposure energy of the image non-projection region may also be cumulative exposure energy on the image non-projection region that is used for a plurality of slice layers within a specified time period. For example, a three-dimensional object to be printed has 100 slice layers. Within a specified time period (such as 5 s), the cumulative exposure energy of the image projection region represents cumulative exposure energy required by a target projected image in a particular layer, such as an 89th layer. The cumulative exposure energy of the image non-projection region may be cumulative exposure energy required by an image non-projection region of the selective light-transmitting display (such as the LCD screen) for a 60th layer of slice layer within a specified time period (such as 5 s), or cumulative exposure energy required by all image non-projection regions of the plurality of slice layers (such as layers 1 to 60).

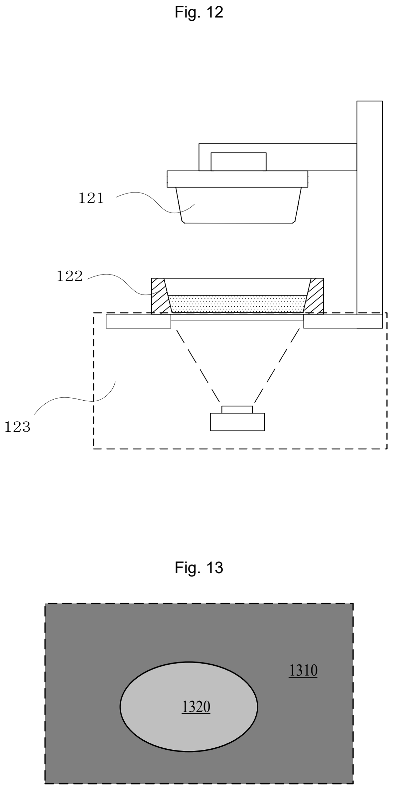

FIG. 13 is a schematic diagram of division of a selective light-transmitting display according to an embodiment of the present disclosure. As shown in FIG. 13, the selective light-transmitting display (defined by the dashed lines) is divided into an image projection region 1320 and an image non-projection region 1310. The image projection region 1320 corresponds to a pattern or contour of a material to be cured. That is, the image projection region corresponds to a contour of an object to be printed, while the image non-projection region 1310 is a screen region except the image projection region.

Through the above steps, a technical effect of improving the accuracy of printing a three-dimensional printed object is achieved, and the technical problem in the related art that details of the three-dimensional printed object are unclear or distorted because the LCD screen may also cure a material in the image non-projection region.

In an optional embodiment, the first preset power is a power set after light intensity calibration. Optical calibration is performing a series of compensation on an original light source to obtain the first preset power. For example, if light emitted by an LED unit is not uniform, or if aging is less than expected aging, compensation is required to obtain uniform light or desired light power.

In an optional embodiment, a plurality of slice images are obtained based on a three-dimensional printed object. Each slice image determines the target projected image.

In an optional embodiment, the first preset power is adjusted based on a preset coefficient to obtain the second preset power.

In an optional embodiment, the preset coefficient is determined in the following manner: obtaining the number of printed layers required by the three-dimensional printed object, where a projection of a sliced model of the three-dimensional printed object includes the target projected image; determining the critical exposure energy required by curing of the photocurable material; determining an initial dynamic contrast of the three-dimensional printing device, and a curing interface exposure energy per unit area of the three-dimensional printing device within the image projection region, where the initial dynamic contrast is a ratio of a light intensity of light projected by the three-dimensional printing device in the image projection region to a light intensity of light projected in the image non-projection region; and determining the preset coefficient based on the number of printed layers, the critical exposure energy, the initial dynamic contrast, and the curing interface exposure energy.

A contrast of a screen is typically considered as a key factor in improving the printing quality. That is, higher contrast means clearer image boundaries, which helps to precisely control a curing region of the photocurable material. However, this high contrast also brings risks of a "screen burn-in" effect and a shortened screen lifespan.

However, in the present application, by dynamically adjusting the contrast by controlling power outputs of the LED units corresponding to the image projection region and the power outputs of the LED units corresponding to the image non-projection region, light intensity distribution can be managed more finely. While ensuring the curing of the material in the image projection region, it also avoids accidental curing of the photocurable material in the image non-projection region, improves detail clarity and surface quality of the printed object, reduces the contrast between the image projection region and the image non-projection region, and prolongs the lifespan of the screen.

In some implementations, if the dynamic contrast does not meet a requirement, the dynamic contrast may also be compensated or adjusted based on the preset coefficient, thus obtaining a higher dynamic contrast.

In an optional embodiment, a range of the preset coefficient is configured to be within an interval of $[0, C_0 E_C / nE_0)$, where $C_0$ represents the initial dynamic contrast; $E_C$ represents the critical exposure energy; n represents the number of printed layers; and $E_0$ represents the curing interface exposure energy.

In some embodiments, the preset coefficient may be determined in advance based on the photocurable material. A specific determination step may be as follows: first, obtaining critical exposure energy $E_C$ of the photocurable material, where $E_C$ is critical exposure energy at which the photocurable material just begins to form a solid or semi-solid. In a case that the photocurable material is resin, $E_C$ is critical exposure energy at which the resin begins to form a gel. For a photocuring printing technology, under an extreme conditions (without considering the disturbance of the resin), it is necessary to ensure that the cumulative exposure energy of the image non-projection region of the screen in the entire printing process is less than a value of $E_C$, to ensure that no additional solid residues will be produced in the image non-projection region of the screen in the printing process, namely, to ensure that formula (1) is workable:

$$nE_1 < E_C \qquad (1)$$

where $E_1$ represents curing interface exposure energy of the image non-projection region, and n represents a total number of printed exposure energy layers required by current printing of the three-dimensional object. In addition, $E_1$ may be determined by using a dynamic contrast C of device, namely, formula (2):

$$E_1 = E_0/C \qquad (2)$$

where $E_0$ represents curing interface exposure energy of the image projection region, that is, the dynamic contrast C of device is a ratio of light intensity projected to the image projection region of the screen to light intensity projected to the image non-projection region of the screen. When a unit area of photocurable material is limited to be irradiated, the dynamic contrast C of device may be a ratio of the curing interface exposure energy of the image projection region of the screen to the curing interface exposure energy of the image non-projection region of the screen.

By substituting formula (2) into formula (1), formula (3) may be obtained:

$$nE_0/C < E_C \qquad (3)$$

where n, $E_0$, and $E_C$ are all related to requirements of the sliced model itself and properties of the material. Therefore, a desired dynamic contrast of device in this situation has an extremely large value, that is, $C > nE_0/E_C$.

Reducing the light intensity projected onto the image non-projection region as much as possible while satisfying the light intensity of the image projection region of the screen is an effective method for increasing the dynamic contrast of device. A light source (the second LED unit) corresponding to the image non-projection region of the screen is lit up with a preset coefficient $\alpha$, where $\alpha$ represents a value between 0 and 1, which may reduce the light intensity of the image non-projection region and increase the dynamic contrast of device, i.e. satisfying:

$$C_1 = C_0/\alpha \qquad (4)$$

where $C_1$ represents a dynamic contrast of device after the light source corresponding to the image non-projection region is lit up with the preset coefficient $\alpha$, and $C_0$ represents the initial dynamic contrast of device.

Therefore, by substituting formula (4) into formula (3), the following formula may be obtained:

$$\alpha < C_0 E_C / n E_0 \qquad (5)$$

Therefore, the configuration range of the preset coefficient $\alpha$ may be determined to be $[0, C_0 E_C / n E_0)$.

It should be noted that formula (5) only provides a example manner to determine the preset coefficient $\alpha$. Based on this, the configuration range of the preset coefficient $\alpha$ may be further limited by combining the performance of an LED, the disturbance of the resin, or the like.

In an optional embodiment, the determining the critical exposure energy required by curing of the photocurable material includes: obtaining a printing parameter when the photocurable material is used for three-dimensional printing, and a physical parameter of a formed three-dimensional printed object; and inputting the printing parameter and the physical parameter to a pretrained deep learning model, and outputting, by the deep learning model, the critical exposure energy corresponding to the photocurable material, where the deep learning model is trained by using training samples, and each of the training samples includes a sample critical exposure energy corresponding to a sample material, and a sample printing parameter and a sample physical parameter when the sample material is used for three-dimensional printing.

In some embodiments, to determine the preset coefficient $\alpha$, the preset coefficient $\alpha$ may be calculated based on specific parameters of the material, and the control is very precise. However, in practical use, there are some photocurable materials with unknown performances. To improve the compatibility and wide applicability of the method disclosed in the present application, for a photocurable material with unknown material parameters, relevant experimental data can be obtained by printing and measurement, and the deep learning model can be used to analyze the experimental data to obtain a critical exposure energy required by curing of the material per unit area.

The deep learning model needs to be trained in advance. During training, some photocurable materials with known material parameters may be selected for printing and measurement, and relevant parameters may be acquired. For example, a known material may be used for printing, and printing parameters such as exposure energy time during printing, light source power, a thickness of a printed object during fixed exposure energy, a forming height of the printed object, surface quality of the printed object, mechanical properties, viscosity of the material, and printing size accuracy may be recorded. After the printing parameters with the known material parameters are obtained, a critical exposure energy required by curing of the material per unit area is used as a label for the printing parameters. The printing parameters and the corresponding label are used to train an original neural network model to obtain a trained deep learning model.

Based on the above training process, when the trained deep learning model is used, relevant experimental data may be obtained by printing and measuring an unknown material, and the relevant experimental data may be input to the deep learning model for calculation, thus automatically generating a critical exposure energy required by curing of the corresponding material per unit area.

In some embodiments, a large deep learning model may be built, or the above deep learning model may be further trained, so that an obtained deep learning model can automatically calculate the preset coefficient $\alpha$ based on parameters such as a current form, size, layer thickness, and area of a printed model, thereby controlling an LED unit to emit light. Through the above deep learning model, intelligent adaptive printing of an unknown material can be implemented, with high printing efficiency and wide applicability.

It should be noted that for the aforementioned various method embodiments, for the sake of simplicity, they are all described as a series of action combinations. However, those skilled in the art should be aware that the present disclosure is not limited by the order of the described actions, as according to the present disclosure, certain steps can be performed in other orders or simultaneously. In addition, those skilled in the art are also aware that the embodiments described in this specification are all preferred embodiments, and the actions and modules involved may not be necessary for the present disclosure.

According to the descriptions in the above implementations, a person skilled in the art may clearly learn that the method for controlling the light source according to the foregoing embodiments may be implemented by relying on software and an essential commodity hardware platform or by using hardware, but the former is a better implementation in most cases. Based on such an understanding, the technical solutions of the present disclosure essentially, or the part contributing to the existing technology, may be presented in the form of a software product. The computer software product is stored in a storage medium (for example, a read-only memory (ROM)/random access memory (RAM), a magnetic disk, or an optical disk) including several instructions to enable a terminal device (which may be a mobile phone, a computer, a server, a network device, or the like) to perform the methods described in all the embodiments of the present disclosure.

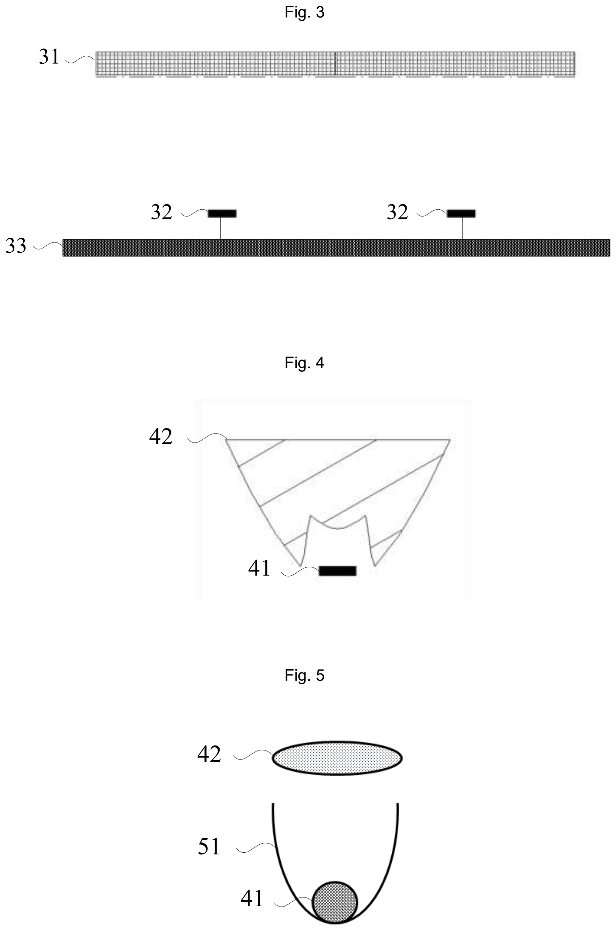

According to the embodiments of the present disclosure, an apparatus for controlling a light source for three-dimensional printing based on the above light source control method is further provided. FIG. 3 is a schematic structural diagram of an apparatus for controlling a light source according to an embodiment of the present disclosure. As shown in FIG. 3, the apparatus for controlling the light source includes a selective light-transmitting display 31, which is configured to selectively transmit light; a light source, which includes a plurality of LED units 32, where light emitted by the plurality of LED units is projected onto a photocurable material through the selective light-transmitting display; and a power control mechanism 33, which is electrically connected to each LED unit and is configured to: control a first LED unit among the plurality of LED units to emit light based on a first preset power, to cause a cumulative exposure energy of an image projection region of the selective light-transmitting display to be greater than or equal to a critical exposure energy of the photocurable material, where the first LED unit corresponds to the image projection region; and control a second LED unit among the plurality of LED units to emit light based on a second preset power, to cause a cumulative exposure energy of an image non-projection region of the selective light-transmitting display to be less than the critical exposure energy of the photocurable material, where the second LED unit corresponds to the image non-projection region.

The light source may include the plurality of LED units. The plurality of LED units are located on the same plane and may be arranged in an array. FIG. 3 is a cross-sectional view of the apparatus for controlling the light source. Each LED unit projects the light onto the selective light-transmitting display for selective light transmission by the selective light-transmitting display. Selectively transmitted light may be then transmitted onto the photocurable material. The power control mechanism may control the first LED unit corresponding to the image projection region in the selective light-transmitting display to emit light at the first preset power, and control the second LED unit corresponding to the image non-projection region to emit light at the second preset power, so that the cumulative exposure energy of the image non-projection region is less than the critical exposure energy of the photocurable material.

In some embodiments, FIG. 4 is a schematic structural diagram of an LED unit according to some embodiments of the present disclosure. As shown in FIG. 4, any one of the plurality of LED units includes an LED 41 and a collimation assembly 42. The collimation assembly is correspondingly arranged on a light outlet side of the LED, and the collimation assembly is configured to collimate the light emitted by the LED.

Each LED unit may include the LED for emitting light and the collimation assembly for focusing. The LED is usually an ultraviolet LED or a visible light LED. The LED has the characteristics of high brightness, low power consumption, and long lifespan. A function of the collimation assembly is to further focus light when the light passes through the collimation assembly to improve the collimation of the light. In some embodiments, the collimation assembly includes at least one of the following: a convex lens, a Fresnel lens, or a total internal reflection lens. A collimation structure generally uses a convex lens, a Fresnel lens, or a total internal reflection (TIR) lens to make light more concentrated.

In some embodiments, FIG. 5 is a schematic structural diagram of another LED unit according to some embodiments of the present disclosure. As shown in FIG. 5, any one of the plurality of LED units further includes a light source reflection assembly 51. The light source reflection assembly 51 is arranged between the LED 41 and the collimation assembly 42 and is configured to collect the light emitted by the LED. A reflection assembly may be arranged at a bottom (a backlight side) of the LED, and the shape and material of the reflection assembly may affect the collimation of the light. Generally, a spotlight design is used to concentrate the light in one direction.

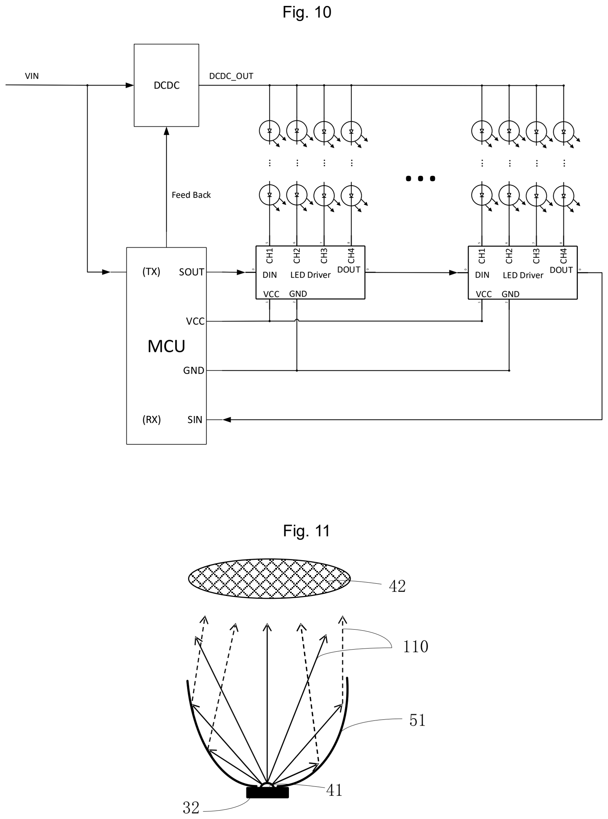

FIG. 11 is a schematic structural diagram of still another LED unit according to some embodiments of the present disclosure. As shown in FIG. 11, each LED unit 32 includes a light source reflection assembly 51 and an LED 41. The light source reflection assembly 51 is arranged between the LED 41 and the collimation assembly 42 to concentrate light 110 emitted by the LED. The reflection assembly can be a TIR lens or a reflection cup.

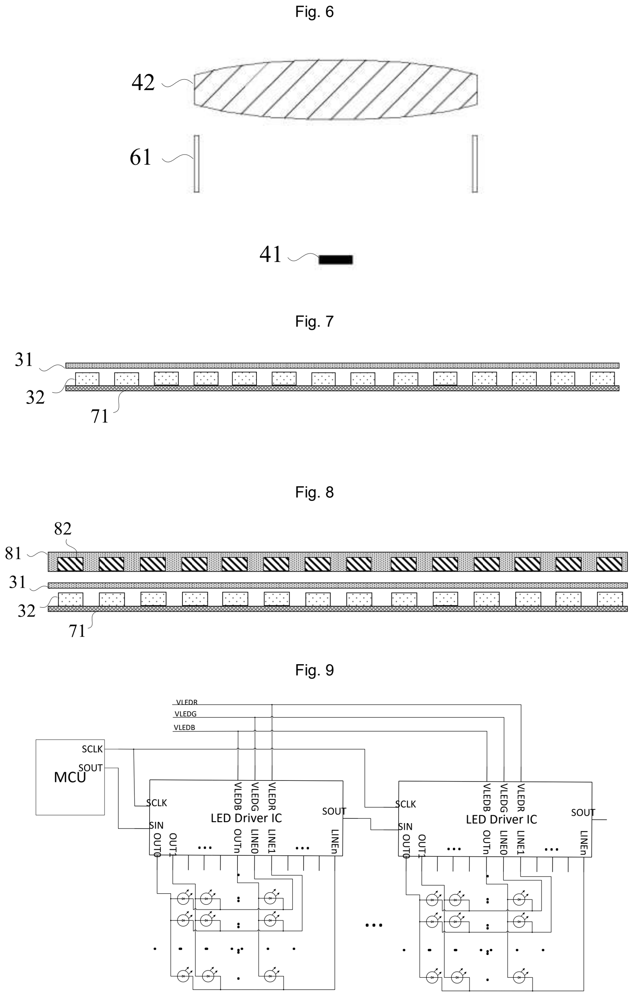

In some embodiments, FIG. 6 is a schematic structural diagram of still another LED unit according to some embodiments of the present disclosure. As shown in FIG. 6, any one of the plurality of LED units further includes a light blocking assembly 61. The light blocking assembly is arranged between the LED 41 and the collimation assembly 42 and is configured to block light emitted by the LED towards a position in which another LED is located. A function of the light blocking assembly is to prevent lights emitted by the LED units from interfering with each other. The light from each LED unit is only responsible for irradiating a corresponding region and cannot affect adjacent units. Precise irradiation is implemented, and a contrast of the screen can be increased.

In some embodiments, FIG. 7 is a schematic structural diagram of another light source control apparatus according to some embodiments of the present disclosure, and FIG. 8 is a schematic structural diagram of still another light source control apparatus according to some embodiments of the present disclosure. As shown in FIG. 7, a controller includes an LED driving circuit 71. The LED driving circuit 71 is connected to the plurality of LED units 32 and is configured to control any one of the plurality of LED units to independently emit light. The plurality of LED units are located below the selective light-transmitting display at a distance of 0.001 to 10 mm. As shown in FIG. 8, a light intensity calibration assembly 81 may also be used to calibrate a light intensity of a selective light-transmitting display-light source set. Usually, micro probes 82 in the light intensity calibration assembly have a position region and quantity correspondence relationship with the LED units in the light source.

In some embodiments, FIG. 9 is a schematic diagram of a driving circuit according to some embodiments of the present disclosure. As shown in FIG. 9, the LED driving circuit includes an LED driver chip (i.e. LED driver IC) and a control chip (i.e. MCU). The control chip is connected to the LED driver chip. The plurality of LED units are arranged in an array. The LED driver chip includes a plurality of positive electrode pins (i.e. OUT0-OUTn) and a plurality of negative electrode pins (i.e. LINE0-LINEn). Any one of the plurality of positive electrode pins is connected to positive electrodes of LED units that are located in the same column; and any one of the plurality of negative electrode pins is connected to negative electrodes of LED units that are located in the same row.

The plurality of LED units may be designed into a matrix layout with a plurality of rows and columns based on a total number of LEDs needing to be driven. In this case, a connection relationship between the LED driver chip and the plurality of LED units may be as follows: the positive electrodes of the LEDs in the same column are connected to the pins OUT0-OUTn of the LED driver chip, and the cathode electrodes of the LEDs in the same row are connected to the pins LINE0-LINEn of the LED driver chip (LED driver IC).

When a particular LED needs to be lit up, a conduction level is simply made to corresponding OUT and LINE lines based on a row number and column number of the LED. Within display time of each frame, each LINE line is accessed inside the driver chip in sequence at a high-frequency refresh rate, and LEDs and the like in the line that need to be lit up are quickly lit up for a short period of time. Therefore, when observed at an extended timeline, a visual effect of the line is consistent with a visual effect achieved by simultaneously lighting up each LED.

Specifically, the control chip (MCU) in the circuit maintains clock synchronization with the driver IC by outputting a serial control clock SCLK signal, and complete data communication with the driver IC through a serial signal SIN. In addition, the driver IC has a SOUT serial signal output, which allows a plurality of driver ICs to be cascaded, that is, a previous SOUT is connected to a next SIN, thereby controlling the plurality of driver ICs in a cascaded manner based on one data output signal of the MCU. In this way, when there are a large number of LEDs needing to be driven and the number of buses of a single driver IC is insufficient, a plurality of driver ICs may be connected in a cascaded form shown in FIG. 7. Certainly, a plurality of serial interfaces of the MCU may also be used to separately control the plurality of driver ICs and connect them in parallel, that is, the plurality of driver ICs are directly connected to the MCU instead of receiving signals transmitted by MCU through other driver ICs.

In some embodiments, FIG. 10 is a schematic diagram of another driving circuit according to some embodiments of the present disclosure. As shown in FIG. 10, the LED driving circuit includes an LED driver chip (i.e. LED driver IC) and a control chip (i.e. an MCU). The control chip is connected to the LED driver chip. The LED driver chip includes a plurality of driving pins; and the plurality of LED units are correspondingly connected to the plurality of driving pins.

FIG. 10 shows another driving circuit diagram of arrayed LEDs. A difference from the above driving manner is that each LED or each string of LEDs is driven by an independent path pin in the LED driver, so that the LEDs do not affect each other and do not need to be displayed in a manner of high-refresh-rate scanning manner. Current that actually flowing through each LED is stable direct current, so that strobing is avoided. A single driver chip has 4, 8, 32 channels or another number of channels, and a chip with an appropriate channel number may be selected based on a required number of LEDs. A connection way for the driver chips and the controller may be connecting the plurality of driver chips in series through DIN and DOUT pins, and is controlled by using a data output signal of the MCU, to achieve a display effect.

According to the embodiments of the present disclosure, a three-dimensional printing device for implementing the above light source control method is further provided. FIG. 12 is a structural block diagram of a three-dimensional printing device according to some embodiments of the present disclosure. As shown in FIG. 12, the three-dimensional printing device includes a forming platform 121, a tray 122, and any one of the above the apparatuses for controlling the light source 123. The forming platform 121 is configured to bear a three-dimensional printed object, and the tray 122 is configured to accommodate a photocurable material. The photocurable material is cured layer by layer under irradiation of the light source to form a three-dimensional object on the forming platform.

The three-dimensional printing device may include a memory and a processor.

The memory may be configured to store software programs and modules, such as the program instructions/modules corresponding to the method for controlling the light source and apparatus in the embodiments of the present disclosure. The processor executes various functional applications and data processing by executing the software programs and the modules that are stored in the memory, thus implementing the above light source control method. The memory may include a high-speed random memory, and may further include a non-volatile memory, for example, one or more magnetic storage apparatuses, a flash memory, or another non-volatile solid-state memory. In some instances, the memory may further include a memory remotely arranged with respect to the processor. These remote memories can be connected to the computer terminal through a network. Examples of the above network include, but are not limited to, Internets, intranets, local area networks, mobile communication networks, and combinations thereof.

The processor may invoke, through a transmission apparatus, information and applications that are stored in the memory to perform the following steps: obtaining a target projected image, where the target projected image is configured for three-dimensional printing; dividing an area of a selective light-transmitting display into an image projection region and an image non-projection region based on the target projected image; and controlling a first LED unit corresponding to the image projection region to emit light based on first preset power, and controlling a second LED unit corresponding to the image non-projection region to emit light based on second preset power, to cause a cumulative exposure energy of the image non-projection region to be less than a critical exposure energy of a photocurable material and cause a cumulative exposure energy of the image projection region to be greater than or equal to the critical exposure energy of the photocurable material.

In some embodiments, the first preset power is a power set after light intensity calibration, and the method includes: adjusting the first preset power based on a preset coefficient to obtain the second preset power.

In some embodiments, the preset coefficient is determined in the following manner: obtaining a number of printed layers required by the three-dimensional printed object, where a projection of a sliced model of the three-dimensional printed object includes the target projected image; determining the critical exposure energy required by curing of the photocurable material; determining an initial dynamic contrast of the three-dimensional printing device, and a curing interface exposure energy per unit area of the three-dimensional printing device within the image projection region, where the initial dynamic contrast is a ratio of a light intensity of light projected by the three-dimensional printing device in the image projection region to a light intensity of light projected in the image non-projection region; and determining the preset coefficient based on the number of printed layers, the critical exposure energy, the initial dynamic contrast, and the curing interface exposure energy.

In some embodiments, the determining the critical exposure energy required by curing of the photocurable material includes: obtaining a printing parameter when the photocurable material is used for three-dimensional printing, and a physical parameter of a formed three-dimensional printed object; and inputting the printing parameter and the physical parameter to a pre-trained deep learning model, and outputting, by the deep learning model, the critical exposure energy corresponding to the photocurable material, where the deep learning model is trained by using training samples, and each of the training samples includes a sample critical exposure energy corresponding to a sample material, and a sample printing parameter and a sample physical parameter when the sample material is used for three-dimensional printing.

In some embodiments, a range of the preset coefficient is configured to be within an interval of $[0, C_0 E_C/n E_0)$, where $C_0$ represents the initial dynamic contrast; $E_C$ represents the critical exposure energy; $n$ represents the number of printed layers; and $E_0$ represents the curing interface exposure energy.

By using the embodiments of the present disclosure, a light source control solution is provided. A manner of using a point light source to provide light intensity for an LCD screen is used. By setting a light emission intensity for the image non-projection region based on a light curing characteristic of the material, a purpose of preventing the light intensity of the image non-projection region from curing the material is achieved. Thus, a technical effect of improving the accuracy of printing the three-dimensional printed object is achieved, and the technical problem in the related art that details of the three-dimensional printed object are unclear or distorted because the LCD screen may also cure the material in the image non-projection region.

A person of ordinary skill in the art can understand that all or some of the steps of various methods in the above embodiments may be implemented by a program instructing relevant hardware of a terminal device. The program may be stored in a non-volatile storage medium. The storage medium may include: a flash disk, a ROM, a RAM, a magnetic disc, an optical disc, or the like.

An embodiment of the present disclosure further provides a non-volatile storage medium. In some embodiments, in this embodiment, the above non-volatile storage medium can be configured to store program codes executed by the method for controlling the light source provided by the above embodiment.

In some embodiments, in this embodiment, the above non-volatile storage medium can be located in any computer terminal in a computer terminal cluster in a computer network, or located in any mobile terminal in a mobile terminal cluster.

In some embodiments, in this embodiment, the non-volatile storage medium is configured to store program codes of the following steps: obtaining a target projected image, where the target projected image is configured for three-dimensional printing; dividing an area of a selective light-transmitting display into an image projection region and an image non-projection region based on the target projected image; and controlling a first LED unit corresponding to the image projection region to emit light based on first preset power, and controlling a second LED unit corresponding to the image non-projection region to emit light based on second preset power, to cause a cumulative exposure energy of the image non-projection region to be less than a critical exposure energy of a photocurable material and cause a cumulative exposure energy of the image projection region to be greater than or equal to the critical exposure energy of the photocurable material.

In some embodiments, the first preset power is power set after light intensity calibration, and the first preset power is adjusted based on a preset coefficient to obtain the second preset power.

In some embodiments, the preset coefficient is determined in the following manner: obtaining a number of printed layers required by the three-dimensional printed object, where a projection of a sliced model of the three-dimensional printed object includes the target projected image; determining the critical exposure energy required by curing of the photocurable material; determining an initial dynamic contrast of the three-dimensional printing device, and a curing interface exposure energy per unit area of the three-dimensional printing device within the image projection region, where the initial dynamic contrast is a ratio of a light intensity of light projected by the three-dimensional printing device in the image projection region to a light intensity of light projected in the image non-projection region; and determining the preset coefficient based on the number of printed layers, the critical exposure energy, the initial dynamic contrast, and the curing interface exposure energy.

In some embodiments, the determining the critical exposure energy required by curing of the photocurable material includes: obtaining a printing parameter when the photocurable material is used for three-dimensional printing, and a physical parameter of a formed three-dimensional printed object; and inputting the printing parameter and the physical parameter to a pre-trained deep learning model, and outputting, by the deep learning model, the critical exposure energy corresponding to the photocurable material, where the deep learning model is trained by using training samples, and each of the training samples includes a sample critical exposure energy corresponding to a sample material, and a sample printing parameter and a sample physical parameter when the sample material is used for three-dimensional printing.

In some embodiments, a range of the preset coefficient is configured to be within an interval of $[0, C_0 E_C/n E_0)$, where $C_0$ represents the initial dynamic contrast; $E_C$ represents the critical exposure energy; n represents the number of printed layers; and $E_0$ represents the curing interface exposure energy.

An embodiment of the present disclosure further provides a computer program product, including a computer program that, when executed by a processor, implements the steps of the method for controlling the light source in the embodiments of the present application.

The sequential numbers of the foregoing embodiments of the present disclosure are merely for description purpose but do not imply the preference of the embodiments.

In the foregoing embodiments of the present disclosure, the description of each embodiment has respective focuses. For a part that is not described in detail in an embodiment, refer to related descriptions in other embodiments.

In the several embodiments provided in the present application, it should be understood that the disclosed technical content may be implemented in other manners. The above-described apparatus embodiment is merely illustrative. For example, the division of the units can be one type of logical functional division, and other divisions are achieved in practice. For example, multiple units or components can be combined or integrated into another system, or some features can be omitted, or not executed. In addition, the shown or discussed mutual coupling or direct coupling or communication connection is an indirect coupling or communication connection through some interfaces, units or modules, and can be electrical or in another form.

The units described as separate components may or may not be physically separated, and the components displayed as units may or may not be physical units, and may be located in one place or may be distributed over a plurality of units. Some or all of the units are selected according to actual needs to achieve the objective of the solution of this embodiment.

In addition, functional units in the embodiments of this application may be integrated into one processing unit, or each of the units may be physically separated, or two or more units may be integrated into one unit. The integrated units mentioned above can be implemented in both a hardware form and a software functional unit form.

If the integrated unit is implemented in the form of a software functional unit and sold or used as an independent product, the integrated unit may be stored in a non-volatile storage medium. Based on such an understanding, the technical solutions of the present disclosure essentially, or the part contributing to the prior art, or some of the technical solutions may be presented in the form of a software product. The computer software product is stored in a storage medium, and includes several instructions for instructing a computer device (which may be a personal computer, a server, a network device, or the like) to perform all or some of the steps of the methods of the various embodiments of the present disclosure. The aforementioned storage media include: various media that can store program codes, such as a USB flash drive, a read-only memory (ROM), a random access memory (RAM), a magnetic disc, or a compact disc.

The foregoing descriptions are optional implementations of the present disclosure only. It is noted that a person of ordinary skill in the art may make some improvements and modifications without departing from the principle of the present disclosure and the improvements and modifications shall fall within the protection scope of the present disclosure.

Industrial practicability:
The solutions provided by the embodiments of the present disclosure may be applied to the technical field of three-dimensional printing. In the embodiments of the present disclosure, a manner of using a point light source to provide light intensity for an LCD screen is used. By setting a light emission intensity for the image non-projection region based on a light curing characteristic of the material, a purpose of preventing the light intensity of the image non-projection region from curing the material is achieved. Thus, a technical effect of improving the accuracy of printing the three-dimensional printed object is achieved, and the technical problem in the related art that details of the three-dimensional printed object are unclear or distorted because the LCD screen may also cure the material in the image non-projection region.

**Claims**

1. A method for controlling a light source, applied to a three-dimensional printing device, wherein the three-dimensional printing device comprises:

a selective light-transmitting screen and a light source; the light source comprises a plurality of Light Emitting Diode (LED) units; light emitted by the light source is projected onto a photocurable material through the selective light-transmitting screen;

the method for controlling the light source comprises:

obtaining a target projected image, wherein the target projected image is configured for three-dimensional printing;

dividing an area of the selective light-transmitting screen into an image projection region and an image non-projection region based on the target projected image, wherein the image projection region corresponds to a first LED unit among the plurality of LED units, and the image non-projection region corresponds to a second LED unit among the plurality of LED units; and

controlling the first LED unit to emit light based on a first preset power, to cause a cumulative exposure energy of the image projection region to be greater than or equal to a critical exposure energy of the photocurable material, and controlling the second LED unit to emit light based on a second preset power, to cause a cumulative exposure energy of the image non-projection region to be less than the critical exposure energy of the photocurable material.

2. The method as claimed in claim 1, wherein the first preset power is a power set after light intensity calibration.

3. The method as claimed in any one of the preceding claims, wherein the method comprises:
obtaining a plurality of slice images based on a three-dimensional printed object, wherein each slice image determines the target projected image.

4. The method as claimed in any one of the preceding claims, wherein the method comprises:
adjusting the first preset power based on a preset coefficient to obtain the second preset power.

5. The method as claimed in any one of the preceding claims, wherein the preset coefficient is determined in the following manner:

obtaining the number of printed layers required by the three-dimensional printed object, wherein a projection of a sliced model of the three-dimensional printed object comprises the target projected image;

determining the critical exposure energy required by curing of the photocurable material;

determining an initial dynamic contrast of the three-dimensional printing device, and a curing interface exposure energy per unit area of the three-dimensional printing device within the image projection region, wherein the initial dynamic contrast is a ratio of a light intensity of light projected by the three-dimensional printing device in the image projection region to a light intensity of light projected by the three-dimensional printing device in the image non-projection region; and

determining the preset coefficient based on the number of printed layers, the critical exposure energy, the initial dynamic contrast, and the curing interface exposure energy.

6. The method as claimed in any one of the preceding claims, wherein the determining the critical exposure energy required by curing of the photocurable material comprises:

obtaining a printing parameter when the photocurable material is used for three-dimensional printing, and a physical parameter of a formed three-dimensional printed object; and

inputting the printing parameter and the physical parameter to a pre-trained deep learning model, and outputting, by the deep learning model, the critical exposure energy corresponding to the photocurable material, wherein the deep learning model is trained by using training samples, and each of the training samples comprises a sample critical exposure energy corresponding to a sample material, and a sample printing parameter and a sample physical parameter when the sample material is used for three-dimensional printing.

7. The method as claimed in any one of the preceding claims, wherein a range of the preset coefficient is configured to be within an interval of $[0, C_0 E_C / n E_0)$; wherein $C_0$ represents the initial dynamic contrast; $E_C$ represents the critical exposure energy; $n$ represents the number of printed layers; and $E_0$ represents the curing interface exposure energy.

8. An apparatus for controlling a light source, applied to a three-dimensional printing device, wherein the apparatus for controlling the light source comprises:

a selective light-transmitting screen, configured to selectively transmit light;

a light source, wherein the light source comprises a plurality of Light Emitting Diode (LED) units, wherein light emitted by the plurality of LED units is projected onto a photocurable material through the selective light-transmitting screen; and
a controller, wherein the controller is electrically connected to each LED unit and is configured to:

control a first LED unit among the plurality of LED units to emit light based on a first preset power, to cause a cumulative exposure energy of an image projection region of the selective light-transmitting screen to be greater than or equal to a critical exposure energy of the photocurable material, wherein the first LED unit corresponds to the image projection region; and
control a second LED unit among the plurality of LED units to emit light based on a second preset power, to cause a cumulative exposure energy of an image non-projection region of the selective light-transmitting screen to be less than the critical exposure energy of the photocurable material, wherein the second LED unit corresponds to the image non-projection region.

9. The apparatus for controlling the light source as claimed in claim 8, wherein any one of the plurality of LED units comprises an LED and a collimation assembly; the collimation assembly is correspondingly arranged on a light outlet side of the LED; and the collimation assembly is configured to collimate light emitted by the LED.

10. The apparatus for controlling the light source as claimed in any one of the preceding claims, wherein the collimation assembly comprises at least one of the following: a convex lens, a Fresnel lens, or a total internal reflection lens.

11. The apparatus for controlling the light source as claimed in any one of the preceding claims, wherein any one of the plurality of LED units further comprises a light source reflection assembly; and the light source reflection assembly is arranged between the LED and the collimation assembly and is configured to concentrate the light emitted by the LED.

12. The apparatus for controlling the light source as claimed in any one of the preceding claims, wherein any one of the plurality of LED units further comprises a light blocking assembly; and the light blocking assembly is arranged between the LED and the collimation assembly and is configured to block light emitted by the LED towards a position in which the LED of another LED unit is located.

13. The apparatus for controlling the light source as claimed in any one of the preceding claims, wherein the controller comprises an LED driving circuit; and the LED driving circuit is connected to the plurality of LED units and is configured to control any one of the plurality of LED units to independently emit light.

14. The apparatus for controlling the light source as claimed in any one of the preceding claims, wherein the LED driving circuit comprises an LED driver chip and a control chip;
the control chip is connected to the LED driver chip; the plurality of LED units are arranged in an array; the LED driver chip comprises a plurality of positive electrode pins and a plurality of negative electrode pins; any one of the plurality of positive electrode pins is connected to positive electrodes of LED units that are located in the same column; and any one of the plurality of negative electrode pins is connected to negative electrodes of LED units that are located in the same row.

15. The apparatus for controlling the light source as claimed in any one of the preceding claims, wherein the LED driving circuit comprises an LED driver chip and a control chip;
the control chip is connected to the LED driver chip; the LED driver chip comprises a plurality of driving pins; and the plurality of LED units are correspondingly connected to the plurality of driving pins.

16. A three-dimensional printing device, comprising:

a forming platform, configured to bear a three-dimensional printed object;
a tray, configured to accommodate a photocurable material; and
the apparatus for controlling the light source as claimed in any one of claims 8 to 15, wherein the photocurable material is cured layer by layer under irradiation of the light source and formed on the forming platform to obtain a three-dimensional object.

17. A non-volatile storage medium, comprising a stored program, wherein the program, when executed, controls a device with the non-volatile storage medium to perform the method for controlling the light source as claimed in any one of claims 1 to 7.

Fig. 1

Computer terminal 10

Processor 102a    Processor 102b    ......    Processor 102n

BUS

Memory 104

Program instruction | Data storage apparatus

Network interface

Input/output interface

Wired and/or wireless network connection

Cursor control device | Keyboard | Display

Fig.2

A target projected image is obtained, where the target projected image is configured for three-dimensional printing — S202

An area of the selective light-transmitting display is divided into an image projection region and an image non-projection region based on the target projected image — S204

A first LED unit corresponding to the image projection region is controlled to emit light based on first preset power, and a second LED unit corresponding to the image non-projection region is controlled to emit light based on second preset power, to cause a cumulative exposure energy of the image non-projection region to be less than a critical exposure energy of a photocurable material and cause a cumulative exposure energy of the image projection region to be greater than or equal to the critical exposure energy of the photocurable material — S206

Fig. 3

31

32          32

33

Fig. 4

42

41

Fig. 5

42

51

41

Fig. 6

42

61

41

Fig. 7

31

32

71

Fig. 8

82

81

31

32

71

Fig. 9

VLEDR
VLEDG
VLEDB

SCLK

SOUT

MCU

SCLK

SIN

OUT0 OUT1 ... OUTn LINE0 LINE1 ... LINEn

VLEDB VLEDG VLEDR

LED Driver IC

SOUT

SCLK

SIN

OUT0 OUT1 ... OUTn LINE0 LINE1 ... LINEn

VLEDB VLEDG VLEDR

LED Driver IC

SOUT

Fig. 10

Fig. 11

Fig. 12

Fig. 13

## INTERNATIONAL SEARCH REPORT

| International application No. |
|---|
| **PCT/CN2025/085466** |

| A. | CLASSIFICATION OF SUBJECT MATTER |
|---|---|
| | B29C64/393(2017.01)i; B29C64/264(2017.01)i; B29C64/386(2017.01)i; B33Y50/00(2015.01)i |

According to International Patent Classification (IPC) or to both national classification and IPC

| B. | FIELDS SEARCHED |
|---|---|

Minimum documentation searched (classification system followed by classification symbols)

IPC:B29C64, B33Y50

Documentation searched other than minimum documentation to the extent that such documents are included in the fields searched

Electronic data base consulted during the international search (name of data base and, where practicable, search terms used)

CNTXT, ENTXTC, VEN, CNKI: 第二功率, 多个, LED, 发光二极管, 功率, 光源, 光源控制, 控制, 屏, 曝光量, 透光屏, 图区, light source, non-projection, exposure, power

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 118456881 A (GUANGZHOU HEYGEARS INTELLIGENT MANUFACTURING CENTER CO., LTD.) 09 August 2024 (2024-08-09) claims 1-15, and description, paragraphs [0035]-[0096] | 1-17 |
| X | CN 114536749 A (SOUTH CHINA UNIVERSITY OF TECHNOLOGY) 27 May 2022 (2022-05-27) claims 1-10, and description, paragraphs [0002]-[0004] | 1-17 |
| A | CN 113352618 A (UNIZ TECHNOLOGY (BEIJING) CO., LTD.) 07 September 2021 (2021-09-07) description, paragraphs [0002]-[0036] | 1-17 |
| A | CN 111002582 A (SHANGHAI UNION TECHNOLOGY CORP.) 14 April 2020 (2020-04-14) entire document | 1-17 |
| A | CN 111745959 A (GOLD-ARRAY TECHNOLOGY (BEIJING), LLC) 09 October 2020 (2020-10-09) entire document | 1-17 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **28 May 2025** | **04 June 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2025/085466**

## C. DOCUMENTS CONSIDERED TO BE RELEVANT

| Category* | Citation of document, with indication, where appropriate, of the relevant passages | Relevant to claim No. |
|---|---|---|
| A | CN 114932680 A (SHENZHEN HEICHUANG TECHNOLOGY CO., LTD.) 23 August 2022 (2022-08-23) <br> entire document | 1-17 |
| A | CN 116766599 A (SHANGHAI VIAMAX TECHNOLOGIES CO., LTD.) 19 September 2023 (2023-09-19) <br> entire document | 1-17 |
| A | US 2007260349 A1 (ENVISIONTEC GMBH) 08 November 2007 (2007-11-08) <br> entire document | 1-17 |
| A | US 2018124341 A1 (GENERAL ELECTRIC COMPANY) 03 May 2018 (2018-05-03) <br> entire document | 1-17 |
| A | WO 2022007423 A1 (UNIZ TECHNOLOGY (BEIJING) CO., LTD.) 13 January 2022 (2022-01-13) <br> entire document | 1-17 |
| A | WO 2023246917 A1 (GUANGZHOU HEYGEARS IMC. INC.) 28 December 2023 (2023-12-28) <br> entire document | 1-17 |

Form PCT/ISA/210 (second sheet) (July 2022)

# EP 4 744 868 A1

## INTERNATIONAL SEARCH REPORT
### Information on patent family members

International application No.

**PCT/CN2025/085466**

| Patent document cited in search report | | | Publication date (day/month/year) | Patent family member(s) | | | Publication date (day/month/year) |
|---|---|---|---|---|---|---|---|
| CN | 118456881 | A | 09 August 2024 | None | | | |
| CN | 114536749 | A | 27 May 2022 | None | | | |
| CN | 113352618 | A | 07 September 2021 | None | | | |
| CN | 111002582 | A | 14 April 2020 | None | | | |
| CN | 111745959 | A | 09 October 2020 | None | | | |
| CN | 114932680 | A | 23 August 2022 | None | | | |
| CN | 116766599 | A | 19 September 2023 | None | | | |
| US | 2007260349 | A1 | 08 November 2007 | DE | 102006019964 | A1 | 31 October 2007 |
| | | | | DE | 102006019964 | B4 | 16 November 2017 |
| | | | | DE | 102006019964 | C5 | 26 August 2021 |
| | | | | US | 7894921 | B2 | 22 February 2011 |
| | | | | JP | 2007298990 | A | 15 November 2007 |
| | | | | US | 2011101570 | A1 | 05 May 2011 |
| | | | | US | 8815143 | B2 | 26 August 2014 |
| | | | | EP | 1849586 | A1 | 31 October 2007 |
| | | | | EP | 1849586 | B1 | 23 September 2015 |
| US | 2018124341 | A1 | 03 May 2018 | EP | 3532222 | A1 | 04 September 2019 |
| | | | | WO | 2018080782 | A1 | 03 May 2018 |
| | | | | US | 10674101 | B2 | 02 June 2020 |
| WO | 2022007423 | A1 | 13 January 2022 | None | | | |
| WO | 2023246917 | A1 | 28 December 2023 | EP | 4545277 | A1 | 30 April 2025 |

Form PCT/ISA/210 (patent family annex) (July 2022)

**EP 4 744 868 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024107556816